# EUROPEAN PATENT APPLICATION

(11) **EP 3 076 637 A1**
(43) Date of publication of application: **05.10.2016**
(21) Application number: 16163355.7
(22) Date of filing: 31.03.2016
(51) Int. Cl.: H04L 29/12

(54) **METHOD AND APPARATUS FOR CONTROLLING USER DEVICE**

(30) Priority: 03.04.2015 KR 20150047613
(71) Applicant: Samsung Electronics Co., Ltd., Gyeonggi-do 16677 (KR)
(72) Inventor: Song, Hyojung, Seoul (KR); Kim, Kwangsub, Yongin-si (KR); Jin, Pyeong-Gyu, Suwon-si (KR)
(74) Representative: Nederlandsch Octrooibureau

(57) **Abstract**

A method and an apparatus for controlling a user device is provided. The method includes detecting a connection of at least one user device by an electronic device, generating a device address for access to the user device; generating a page corresponding to the device address, and controlling the user device according to a control signal input through the page.

## Description

### TECHNICAL FIELD

The present disclosure relates to a method and an apparatus for controlling a user device. More particularly, the present disclosure relates to a method and an apparatus for controlling a user device, which generate an address for controlling at least one user device connected to an electronic device and thus to a particular network, generate a page corresponding to the address, and provide the generated page to the electronic device.

### BACKGROUND

With the recent development of the Internet of things (IOT)/web of things (WoT) technology, a network management service in which at least one user device and system are connected and managed through a network is attracting a spotlight as a future-oriented technology.

All user devices connected through a network can transmit data to each other and can perform communication with various electronic devices. For example, using a user interface arranged in an electronic device, such as a portable device, a user can control all user devices connected through a network, without a hindrance by time or place.

The above information is presented as background information only to assist with an understanding of the present disclosure. No determination has been made, and no assertion is made, as to whether any of the above might be applicable as prior art with regard to the present disclosure.

### SUMMARY

Aspects of the present disclosure are to address at least the above-mentioned problems and/or disadvantages and to provide at least the advantages described below. Accordingly, an aspect of the present disclosure is to provide a method and an apparatus for controlling a user device. If a new user device is added to a network formed using the Internet of things (IoT)/web of things (WoT) technology as described above, a user is required to input information of the user device by himself or herself in order to control the user device.

In order to solve the above issues, various embodiments of the present disclosure provide a method and an apparatus for controlling a user device, which generate an address and a page corresponding to a user device, which has been newly added to a network, and provides the generated address and page to a user, so as to enable the user to control the user device through the page.

In accordance with an aspect of the present disclosure, a method for controlling a user device is provided. The method includes detecting a connection of at least one user device by an electronic device, generating a device address for access to the user device, generating a page corresponding to the device address, and controlling the user device according to a control signal input through the page.

In accordance with another aspect of the present disclosure, an apparatus for controlling a user device is provided. The apparatus includes a device connection unit configured to detect a connection of at least one user device, and a controller configured to generate a device address for connection to the user device and a page corresponding to the device address, and control the user device according to a control signal input through the page.

As described above, a method and an apparatus for controlling a user device according to the present disclosure can generate an address and a page corresponding to a user device when the user device has been added to a network established based on the user device, and provide the page to a user. Accordingly, a user can control the user device according to a control signal input to the page, which improves user convenience.

Other aspects, advantages, and salient features of the disclosure will become apparent to those skilled in the art from the following detailed description, which, taken in conjunction with the annexed drawings, discloses various embodiments of the present disclosure.

### BRIEF DESCRIPTION OF THE DRAWINGS

The above and other aspects, features, and advantages of certain embodiments of the present disclosure will be more apparent from the following description taken in conjunction with the accompanying drawings, in which:
FIG. 1 illustrates a system for controlling a user device according to an embodiment of the present disclosure;
FIG. 2 is a block diagram illustrating elements of an electronic device according to an embodiment of the present disclosure;
FIG. 3 is a block diagram illustrating elements of a device connection unit of an electronic device according to an embodiment of the present disclosure;
FIG. 4 illustrates a universal plug and play (uPnP) protocol arranged in a device connection unit of an electronic device according to an embodiment of the present disclosure;
FIG. 5 is a block diagram illustrating elements of a controller of an electronic device according to an embodiment of the present disclosure;
FIG. 6 is a block diagram illustrating elements of an address management unit of a controller according to an embodiment of the present disclosure;
FIG. 7 is a flowchart illustrating a method of controlling a user device according to an embodiment of the present disclosure;
FIG. 8 is a flowchart of a method of changing or adding an address at the time of connection of a user device according to an embodiment of the present disclosure;
FIG. 9 is a flowchart of a method of changing or removing an address at the time of removal of a user device according to an embodiment of the present disclosure;
FIGS. 10A and 10B illustrate an example of screens for describing a method of configuring a higher address according to an embodiment of the present disclosure;
FIGS. 11A to 11D illustrate an example of screens for describing a method of configuring a lower address according to an embodiment of the present disclosure;
FIG. 12 illustrates a system for controlling a user device according to an embodiment of the present disclosure;
FIG. 13 is a block diagram illustrating elements of a portable device according to an embodiment of the present disclosure;
FIGS. 14A and 14B illustrate an example of screens for describing a method of configuring a higher address according to an embodiment of the present disclosure; and
FIGS. 15A to 15C illustrate an example of screens for describing a method of configuring a lower address according to an embodiment of the present disclosure.

Throughout the drawings, like reference numerals will be understood to refer to like parts, components, and structures.

### DETAILED DESCRIPTION

The following description with reference to the accompanying drawings is provided to assist in a comprehensive understanding of various embodiments of the present disclosure as defined by the claims and their equivalents.. It includes various specific details to assist in that understanding, but these are to be regarded as merely exemplary. Accordingly, those of ordinary skill in the art will recognize that various changes and modifications of the various embodiments described herein can be made without departing from the scope and spirit of the present disclosure. In addition, descriptions of well-known functions and constructions may be omitted for clarity and conciseness.

The terms and words used in the following description and claims are not limited to the bibliographical meanings, but are merely used by the inventor to enable a clear and consistent understanding of the present disclosure. Accordingly, it should be apparent to those skilled in the art that the following description of various embodiments of the present disclosure is provided for illustration purposes only and not for the purpose of limiting the present disclosure as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

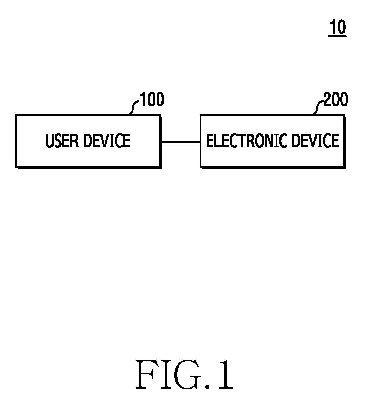

FIG. 1 illustrates a system for controlling a user device according to an embodiment of the present disclosure.

Referring to FIG. 1, a user device control system 10 may include at least one user device 100 and an electronic device 200.

The at least one user device 100 may be connected to the electronic device 200 or may be disconnected from the electronic device 200. The user device 100 connected to the electronic device 200 may be included in a network formed based on the electronic device 200. The user device 100 connected to the electronic device 200 may perform an Internet service or web service (hereinafter, collectively referred to as web service) through the electronic device 200.

The electronic device 200 may be connected with at least one user device 100 through at least one communication scheme among a wired communication scheme and a wireless communication scheme. The electronic device 200 and at least one user device 100 connected to the electronic device 200 may establish a network. At the time of initially establishing a network, the electronic device 200 may generate a higher address for the electronic device 200 and allocate the higher address thereto. The higher address may be an address corresponding to a page capable of providing a web service, for example, a web page. The web service may refer to a service which enables a user to control the operation of the user device 100 or the electronic device 200 through communication. The electronic device 200 may control the operation of the electronic device 200 according to a control signal input from a user through the page.

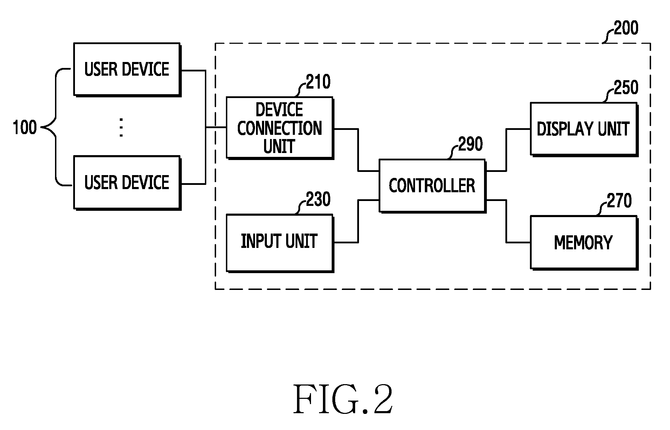

The electronic device 200 may allocate an address to each of at least one user device 100 connected to the electronic device 200 and included in a network. The electronic device 200 may perform a web service through Internet of things (IoT) or web of things (WoT). The higher address or lower address may be formed in various forms, such as uniform resource identifier (URI), UR Locator (URL), and internet protocol (IP). The electronic device 200 may be a HomeSync™ device capable of performing a web service or various types of electronic devices capable of performing a web service, such as a television (TV), a monitor, a digital versatile disc (DVD), a refrigerator, and a washing machine. The user device 100 may be various types of user devices, such as a TV, a monitor, a DVD, a refrigerator, and a washing machine, which can connect with the electronic device 200 through at least one communication scheme among a wired communication scheme and a wireless communication scheme. The configuration of the electronic device 200 is described below with reference to FIG. 2.

FIG. 2 is a block diagram illustrating main elements of an electronic device according to an embodiment of the present disclosure.

Referring to FIG. 2, the electronic device 200 may include a device connection unit 210, an input unit 230, a display unit 250, a memory 270, and a controller 290.

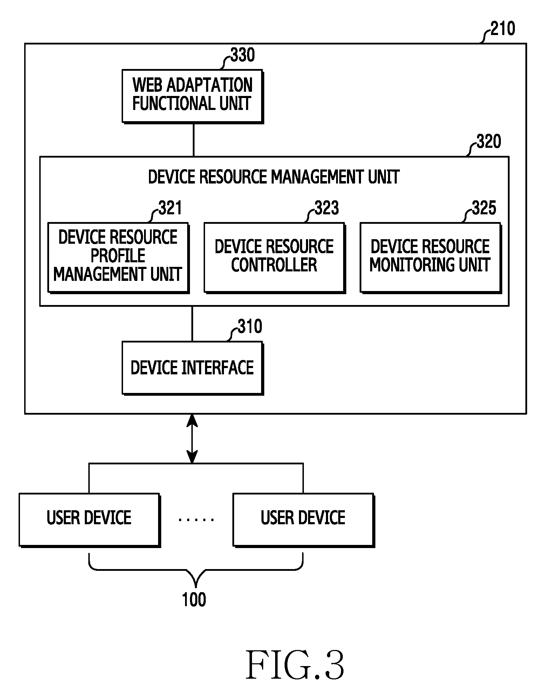

When the user device 100 is connected, the device connection unit 210 may provide a protocol according to a web communication scheme capable of performing a web service to the user device 100 to enable the user device 100 to perform the web service. The operation of the device connection unit 210 is described below with reference to FIG. 3.

FIG. 3 is a block diagram illustrating elements of a device connection unit of an electronic device according to an embodiment of the present disclosure.

Referring to FIG. 3, the device connection unit 210 may include a device interface 310, a device resource management unit 320, and a web adaptation functional unit 330.

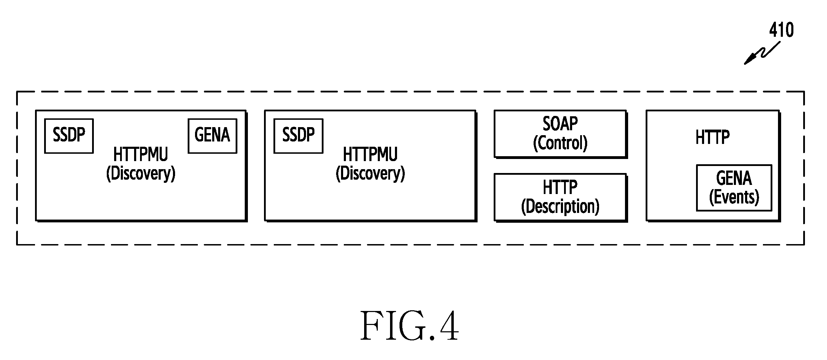

The device interface 310 may include a communication interface appointed for communication with at least one user device 100. For example, the device interface 310 may include a Bluetooth interface for communication with a user device 100 supporting a Bluetooth communication, and may include a ZigBee interface for communication with a user device 100 supporting a ZigBee communication. An operation of detecting connection of the user device 100 is described below with reference to FIG. 4.

FIG. 4 illustrates a universal plug and play (uPnP) protocol arranged in a device connection unit of an electronic device according to an embodiment of the present disclosure.

Referring to FIG. 4, the device connection unit 210 may confirm the connection of the user device 100 with the electronic device 200, using a simple service discovery protocol (SSDP) of the uPnP 410. The device connection unit 210 may identify the status information of the user device 100, using hyper text transfer protocol multi-cast over user datagram protocol (UDP) (HTTPMU), HTTP, simple object access protocol (SOAP), and generic event notification architecture (GENA) of the uPnP 410. In this event, the status information may include, for example, the availability, capability, and response time of the user device 100.

The device resource management unit 320 may control and manage at least one user device 100 connected to the electronic device 200. To this end, the device resource management unit 320 may include a device resource profile management unit 321, a device resource controller 323, and a device resource monitoring unit 325.

The device resource profile management unit 321 may identify location information of a user device 100 connected to the electronic device 200. The device resource profile management unit 321 may identify status information of the user device 100 together with the device resource monitoring unit 325 and the uPnP 410. The device resource monitoring unit 325 may identify status information of the user device 100. When the status information of the user device 100 changes, the device resource monitoring unit 325 may provide the changed status information to the device resource profile management unit 321.

The device resource controller 323 may directly control and manage the user device 100. The device resource controller 323 may detect addition or removal of a user device 100 in a network, together with the device resource profile management unit 321. For example, the device resource controller 323 may detect connection or removal of the user device 100 to or from the electronic device 200, together with the device resource profile management unit 321.

The web adaptation functional unit 330 may control a protocol of the user device 100 and a web protocol for communication between user device 100 and a web service. For example, when the user device 100 uses a Bluetooth communication, the web adaptation functional unit 330 may provide a protocol according to a web communication scheme to enable the user device 100 to perform a web service.

The input unit 230 may generate input data in response to a user input of the electronic device 200. The input unit 230 may include at least one input means. The input unit 230 may include a key pad, a dome switch, a button, a touch panel, and a jog & shuttle.

The display unit 250 may display a screen according to the operation of the electronic device 200. The display unit 250 may display a page corresponding to a higher address allocated to the electronic device 200. The display unit 250 may include a liquid crystal display (LCD), a light emitting diode (LED) display, an organic LED (OLED) display, a micro electro mechanical system (MEMS) display, and an electronic paper display. The display unit 250 may include a plurality of light emitting diodes. The display unit 250 may be combined with the input unit 230 to be implemented as a touch screen. When the electronic device 200 does not have a display unit 250, the electronic device 200 may provide the page to the user device 100 having the display unit 250 to enable the operation of the display unit 250.

The memory 270 may store operation programs of the electronic device 200. The memory 270 may store information of the electronic device 200. The information of the electronic device 200 may include location information of the electronic device 200, an identifier of the electronic device 200, a manufacturer company of the electronic device 200, a rated capacity of the electronic device 200, identification information of the electronic device 200, a serial number of the electronic device 200, a manufacture number of the electronic device 200, and the availability, capability, and response time of the electronic device 200. The memory 270 may store the information of at least one user device 100 connected to the electronic device 200 to establish a network.

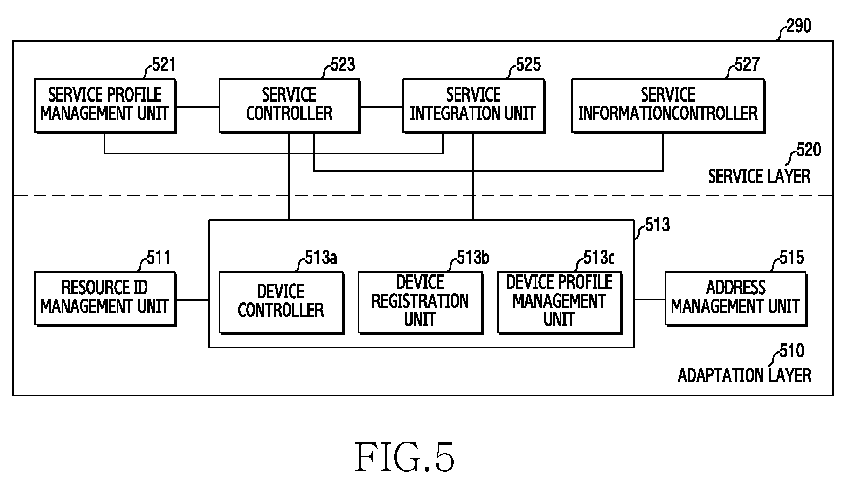

The controller 290 may generate an address for connection to the user device 100 and a page corresponding to the address, and control the user device 100 according to a control signal input through the page. The configuration of the controller 290 is described below with reference to FIG. 5.

FIG. 5 is a block diagram illustrating elements of a controller of an electronic device according to an embodiment of the present disclosure.

Referring to FIG. 5, the controller 290 may be divided into an adaptation layer 510 and a service layer 520 for operation.

The adaptation layer 510 may connect a user device 100 using a communication protocol different from that of the web communication to the service layer 520 to enable the user device 100 to perform the web service. The adaptation layer 510 may enable the user device 100 to perform a web service, thereby enabling a user to control the user device 100 through the web communication. The adaptation layer 510 may provide a user with a user interface which enables identification of the status information of the user device 100.

The adaptation layer 510 may include a resource identifier (ID) management unit 511, a resource management unit 513, and an address management unit 515. The resource management unit 513 may include a device controller 513a, a device registration unit 513b, and a device profile management unit 513c.

The resource ID management unit 511 may store an ID of the user device 100. The resource ID management unit 511 may identify and store an ID of a user device 100 connected to the electronic device 200 through the device connection unit 210.

The resource management unit 513 may control at least one user device 100 and manage information of the user device 100, based on a result of connection to or disconnection from the electronic device 200 detected by the device resource controller 323 of the device connection unit 210. To this end, the resource management unit 513 may include the device controller 513a, the device registration unit 513b, and the device profile management unit 513c.

The device controller 513a may control the operations of the electronic device 200 or at least one user device 100 connected to the electronic device 200, by a control signal input from a user. The control signal may be input through a page corresponding to an address allocated to the electronic device 200 or the user device 100.

The device registration unit 513b may provide information of the user device 100 to the address management unit 515, based on a result of connection to or disconnection from the electronic device 200 detected by the device resource controller 323 of the device connection unit 210. To this end, the device registration unit 513b may identify information relating to the user device 100 provided from the device profile management unit 513c.

The device profile management unit 513c may identify and store information relating to the user device 100. The device profile management unit 513c may identify location information of the user device 100 and the type of communication that can be performed by the user device 100, from the information of the user device 100 received from the device resource profile management unit 321 of the device connection unit 210.

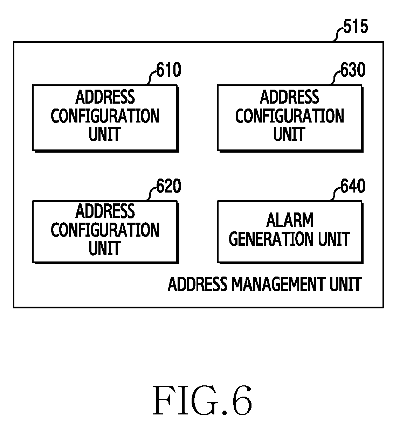

The address management unit 515 may acquire information of a user device 100 currently connected to the electronic device 200 through the resource management unit 513. The address management unit 515 may allocate an address to the electronic device 200 and may allocate an address to a user device 100 connected to the electronic device 200. The configuration of the address management unit 515 is described below with reference to FIG. 6. In FIG. 5, the address management unit 515 is included in the adaptation layer 510 in the controller 290 of the electronic device 200. However, the present disclosure is not limited thereto. The address management unit 515 may be included in the service layer 520 in the controller 290 of the electronic device 200 or included in a separate external device (not shown) located outside of the electronic device 200.

FIG. 6 is a block diagram illustrating elements of an address management unit of a controller according to an embodiment of the present disclosure.

Referring to FIG. 6, in response to a request for generation of a network to use a web service through the electronic device 200, the address configuration unit 610 may generate a higher address, using the information of the electronic device 200. For example, the request for generation of a network may include a form of extensible markup language (XML), javascript object notation (JSON), or HTTP. The address configuration unit 610 may generate and allocate a higher address using the information of the electronic device 200 stored in the memory 270. The address configuration unit 610 may use a rated voltage, service profile information, a power capacity, a memory size, a device type, and a protocol type in generating the higher address. For example, the service profile information may include the number of electronic devices 200 and user devices 100 configuring a network, the number of parameters provided by the electronic device 200 and the user device 100, and the data size of the parameters provided by the electronic device 200 and the user device 100, which may be used for generation of the higher address.

The device change detection unit 630 may detect a connection to or disconnection from the electronic device 100. When a connection of a new user device 100 is detected by the device change detection unit 630, the address configuration unit 610 may allocate a new address to the connected user device 100. When a disconnection of the connected user device 100 is detected, the address configuration unit 610 may remove the address allocated to the user device 100.

The page generation unit 620 may generate a page corresponding to an address allocated to a user device 100 added or removed by the device change detection unit 630. In this event, the page may be generated by requesting a web server existing in an internal or external network to generate a new page.

The alarm generation unit 640 may generate and output an alarm notifying that an address of the electronic device 200 or the user device 100 has been added or changed.

According to an embodiment of the present disclosure, the device change detection unit 630 may compare the information of the electronic device 200 and at least one user device 100 connected to the electronic device 200. When a result of the comparison shows a convergence to a condition for changing of the higher address, for example, when the rated voltage of the electronic device 200 is lower than the rated voltage of the user device 100, the address configuration unit 610 may generate a new higher address and allocate the address to the user device 100.

The address configuration unit 610 may generate a lower address based on the new higher address allocated to the user device 100 and allocate the lower address to the electronic device 200. The address configuration unit 610 may change the lower address having been allocated to at least one user device 100 connected to the electronic device 200 to a new lower address based on the new higher address and allocate the changed lower address. The page generation unit 620 may generate a page corresponding to the new higher address and the changed lower address.

When a result of the comparison by the device change detection unit 630 does not show a convergence to the condition for changing of the higher address, the address configuration unit 610 may generate a lower address based on the higher address and allocate the generated lower address to the user device 100. The page generation unit 620 may generate a page corresponding to the lower address.

According to an embodiment of the present disclosure, when the device change detection unit 630 detects disconnection of at least one user device 100 connected to the electronic device 200, the address configuration unit 610 may remove the address allocated to the user device 100. When the device change detection unit 630 has identified the disconnection of at least one user device 100 connected to the electronic device 200, the address configuration unit 610 may determine whether a higher address has been allocated to the disconnected user device 100. When a higher address is allocated to the user device 100, the address configuration unit 610 may identify the information of the electronic device 200 and at least one user device 100 connected to the electronic device 200.

The address configuration unit 610 may select one of the electronic device 200 and the user device 100, based on a result of the identification of the information. The address configuration unit 610 may remove the higher address allocated to the user device 100 and generate a new higher address. The address configuration unit 610 may allocate the new higher address to the selected electronic device 200 or user device 100. The address configuration unit 610 may change the lower address allocated to the user device 100 connected to the electronic device 200 to a new lower address based on the new higher address. The page generation unit 620 may generate a page corresponding to the new higher address and the changed lower address.

When no higher address is allocated to the disconnected user device 100, the address configuration unit 610 may remove the lower address allocated to the user device 100. The page generation unit 620 may remove a page corresponding to the lower address, in response to the removal of the lower address.

The service layer 520 may enable a user device 100 connected to the service layer 520 to perform a web service through the adaptation layer 510. The service layer 520 may include a service profile management unit 521, a service controller 523, a service integration unit 525, and a service connection controller 527.

The service profile management unit 521 may be involved in registration of a web service. The service profile management unit 521 may register a web service through a communication with the service controller 523 and the service integration unit 525. The service profile management unit 521 may include a service type, a service category name, a service name, and service provider information for registration of a web service. The service type may include a power control service, a monitoring service, a sensing service, and a printing service, and the service category name may include a personal web service, a public web service, and a company web service. At the time of changing of the web service, the service profile management unit 521 may update the web service through a communication with the service controller 523 and the service integration unit 525.

The service controller 523 may perform a connection between the user device 100 and the application and execution and management of the application. The service controller 523 may identify a registered web service by inter-working with the service profile management unit 521. The service controller 523 may determine whether a correct authentication for a web service request has been performed, through a communication with the service connection controller 527.

The service controller 523 may register or de-register a web service, together with the service profile management unit 521. In order to provide a web service, a service is required to be registered as a web service in the service profile management unit 521. When a web service is generated or deleted, the service controller 525 may transmit a request for registration or de-registration of a web service to the service profile management unit 521.

The service integration unit 525 may determine whether web services can configure new web services, and provide a result of the determination to the service controller 523.

The service connection controller 527 may control connection of an application provider and a web service provider. The service connection controller 527 may be involved in information associated with the user and general authentication-related affairs.

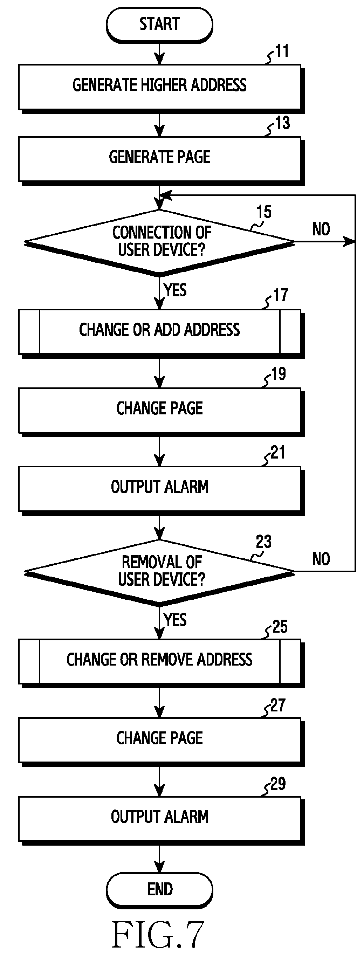

FIG. 7 is a flowchart illustrating a method of controlling a user device according to an embodiment of the present disclosure.

Referring to FIG. 7, in operation 11, the electronic device 200 may configure a network based on the electronic device 200. The electronic device 200 may generate a higher address for connection to the electronic device 200 based on the information of the electronic device 200 and allocate the generated higher address to the electronic device 200. The information of the electronic device 200 may include, for example, location information of the electronic device 200, an identifier of the electronic device 200, a manufacturer company of the electronic device 200, a rated capacity of the electronic device 200, identification information of the electronic device 200, a serial number of the electronic device 200, a manufacture number of the electronic device 200, and the availability, capability, and response time of the electronic device 200. The electronic device 200 may be various types of electronic devices capable of performing a web service, such as a HomeSync™ device, a TV, a monitor, a DVD, a refrigerator, and a washing machine.

In operation 13, the electronic device 200 may generate a page corresponding to the allocated higher address. The page may be a page for input of a control signal for controlling the electronic device 200 or a page for identifying at least one user device 100 connected to the electronic device 200 and to a network.

When a connection of at least one user device 100 is detected in operation 15, the electronic device 200 may change or add an address according to the connected user device in operation 17. When a connection of the user device 100 is not detected, the electronic device 200 may continuously monitor the connection of the user device 100. The user device 100 may be various types of user devices, such as a TV, a monitor, a DVD, a refrigerator, and a washing machine, which can connect with the electronic device 200 through at least one communication scheme among a wired communication scheme and a wireless communication scheme.

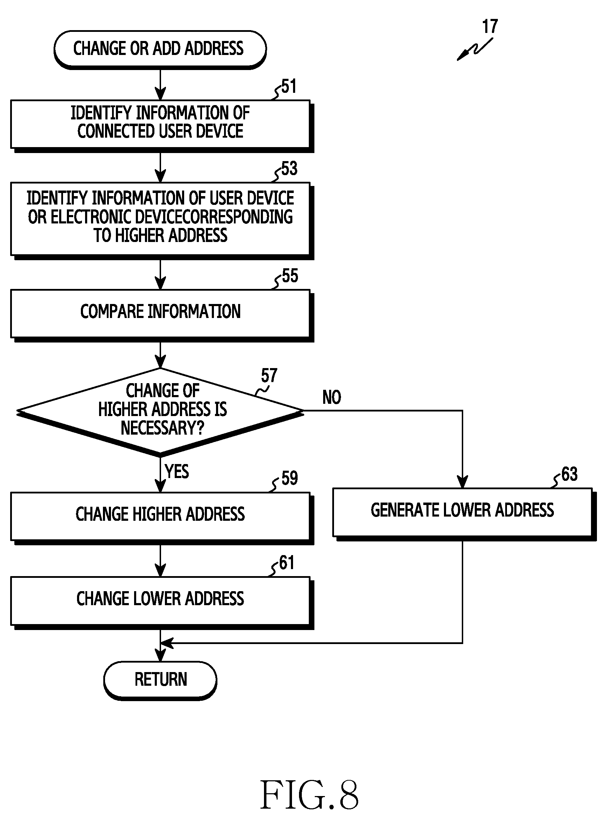

In operation 17, the electronic device 200 may change or add of an address according to the connected user device 100. An operation of changing or adding an address at the time of connection of the user device 100 is described below with reference to FIG. 8.

FIG. 8 is a flowchart of a method of changing or adding an address at the time of connection of a user device according to an embodiment of the present disclosure.

Referring to FIG. 8, in operation 51, the electronic device 200 may identify information of a user device 100 connected to the electronic device 200 and included in a network. In operation 53, the electronic device 200 may identify the information of the electronic device 200 to which a higher address has been allocated. In operation 55, the electronic device 200 may compare the information of the user device 100 and the information of the electronic device 200. For example, the electronic device 200 may compare the rated capacity of the electronic device 200 and the rated capacity of the user device 100.

When it is determined in operation 57 that changing of the higher address of the electronic device 200 is necessary, the electronic device 200 the electronic device 200 may generate a new higher address of a network, based on the information of the user device 100 in operation 59. When changing of the higher address is unnecessary, the electronic device 200 the electronic device 200 may allocate an address to the connected user device 100 in operation 63.

For example, when the rated capacity of the electronic device 200 is smaller than the rated capacity of the user device 100, the electronic device 200 determines that changing of the higher address is necessary and may generate a new higher address of a network, based on the information of the user device 100, in operation 59. The electronic device 200 may allocate the generated new higher address to the user device 100. In operation 61, the electronic device 200 may generate a lower address of a new higher address, instead of the higher address having been allocated to the electronic device 200, and allocate the lower address to the electronic device 200. The electronic device 200 may also change the lower address having been allocated to at least one user device 100 connected to the network to a lower address of a new higher address and allocate the changed lower address. When the changing of the lower address is completed, the electronic device 200 may change a page corresponding to the higher address and the lower address changed according to the connection of the user device 100 and generate a page corresponding to the added lower address in operation 19.

When the rated capacity of the electronic device 200 is larger than the rated capacity of the user device 100, the electronic device 200 determines that changing of the higher address allocated to the electronic device 200 is unnecessary and may allocate an address to the connected user device 100 in operation 63. For example, the electronic device 200 may generate a lower address of the higher address allocated to the electronic device 200 and allocate the lower address to the user device 100.

In operation 19, the electronic device 200 may change a page corresponding to the higher address and the lower address changed according to the connection of the user device 100 and generate a page corresponding to the added lower address. In operation 21, the electronic device 200 may output an alarm notifying of the changing or generation of the page according to the connection of the user device 100.

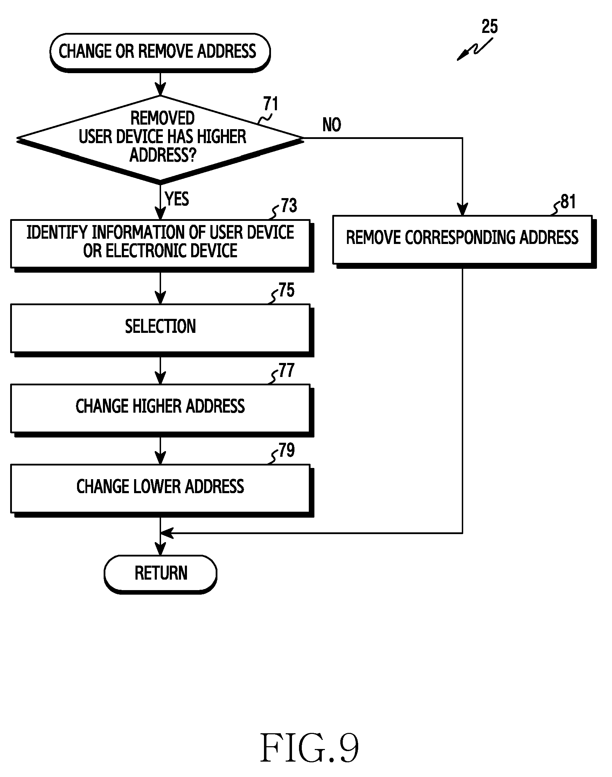

When disconnection of at least one connected user device 100 is detected in operation 23, the electronic device 200 may change or remove an address according to the disconnected user device 100 in operation 25. When disconnection of the user device 100 is not detected in operation 23, the electronic device 200 may return to operation 15. In operation 25, the electronic device 200 may perform change or removal of an address according to the disconnected user device 100. An operation of changing or removing an address at the time of disconnection of the user device 100 is described below with reference to FIG. 9.

FIG. 9 is a flowchart of a method of changing or removing an address at the time of disconnection of a user device according to an embodiment of the present disclosure.

Referring to FIG. 9, in operation 71, the electronic device 200 may determine whether an address allocated to the disconnected user device 100 is a higher address. As a result of the determination in operation 71, when the address allocated to the disconnected user device 100 is a higher address, the electronic device 200 may identify information of the electronic device 200 and information of at least one user device 100 connected to the electronic device 200 in operation 73. In operation 75, based on the identified information, the electronic device 200 may select a device having the largest rated capacity from the electronic device 200 and the at least one user device 100. In operation 77, the electronic device 200 may generate a new higher address, and allocate the generated new higher address to the selected electronic device 200 or user device 100. In operation 79, the electronic device 200 may change a lower address allocated to at least one user device 100 connected to the electronic device 200, except for the electronic device 200 or user device 100 to which the new higher address has been allocated.

As a result of the checking in operation 71, when the address allocated to the disconnected user device 100 is not a higher address, the electronic device 200 may remove the lower address allocated to the disconnected user device 100 in operation 81.

In operation 27, the electronic device 200 may change a page corresponding to the higher address and the lower address changed according to the disconnection of the user device 100 and remove a page corresponding to the removed lower address. In operation 29, the electronic device 200 may output an alarm notifying of the changing or removal of the page according to the disconnection of the user device 100.

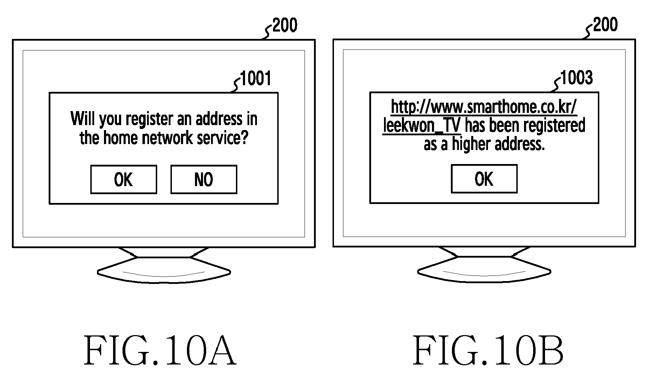

FIGS. 10A and 10B illustrate an example of screens for describing a method of configuring a higher address according to an embodiment of the present disclosure.

Referring to FIGS. 10A and 10B, if a user wants to use a web service, for example, a home network service, using an electronic device 200, for example, a smart TV 200, the electronic device 200 may display an alarm message 1001 in FIG. 10A. If "OK" is selected in the alarm message 1001, the electronic device 200 may display an alarm message 1003 in FIG. 10B. For example, "http://www.smarthome.co.kr/leekwon_TV" in the message 1003 may be a higher address allocated to the electronic device 200 providing a home network service.

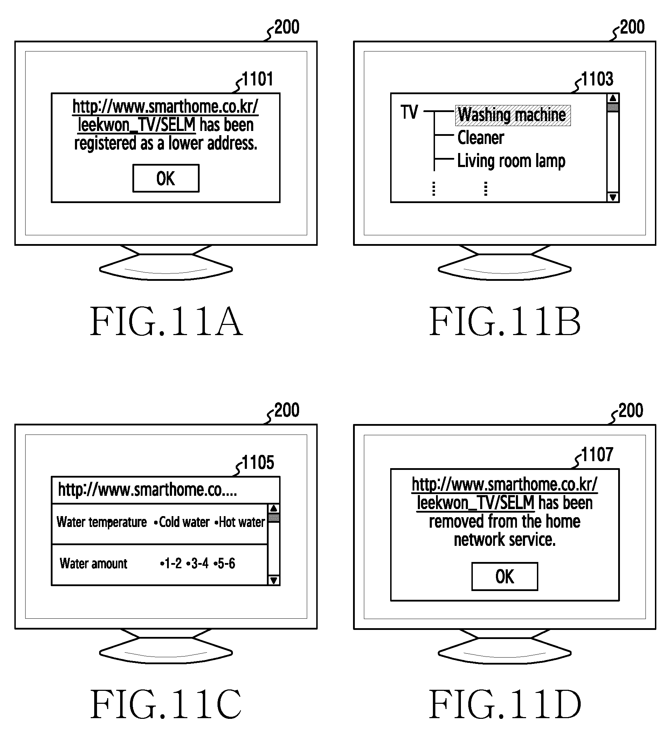

FIGS. 11A to 11D illustrate an example of screens for describing a method of configuring a lower address according to an embodiment of the present disclosure.

Referring to FIGS. 11A to 11D, when a user device 100, for example, a washing machine, is connected through a wire or wirelessly to the electronic device 200 to which a higher address has been allocated in a home network service, the electronic device 200 may display an alarm message 1101 indicating that a lower address has been allocated to the washing machine, as shown in FIG. 11A. The address http://www.smarthome.co.kr/leekwon_TV/SELM in the message 1101 may be a lower address of the higher address allocated to the electronic device 200.

If "OK" is selected in the message 1101 in FIG. 11A, the electronic device 200 may display a message 1103 as shown in FIG. 11B. From the message 1103, the user can identify that, based on the TV, the electronic device 200 has been allocated a higher address in a home network service, and that the user devices 100 connected to the TV are a washing machine, a cleaner, and a living room lamp.

If the washing machine is selected in the message 1103 in FIG. 11B, the electronic device 200 may display a message 1105 as shown in FIG. 11C. In the message 1105, when a control signal for operating a washing machine is input by a user, the electronic device 200 may control the operation of the washing machine based on the control signal.

When the washing machine is removed from the home network service, for example, when the washing machine connected to the electronic device 200 is disconnected, the electronic device 200 may display a message notifying of the removal of the lower address allocated to the washing machine. For example, the electronic device 200 may display a message 1107 reporting that the address "http://www.smarthome.co.kr/leekwon_TV/SELM" has been removed, as shown in FIG. 11D.

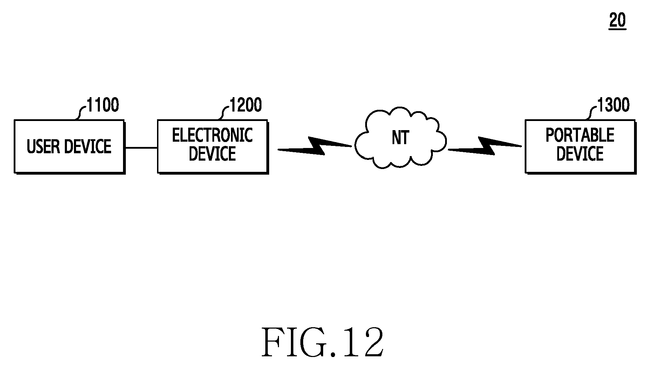

FIG. 12 illustrates a system for controlling a user device according to an embodiment of the present disclosure.

Referring to FIG. 12, a user device control system 20 may include at least one user device 1100, an electronic device 1200, and a portable device 1300.

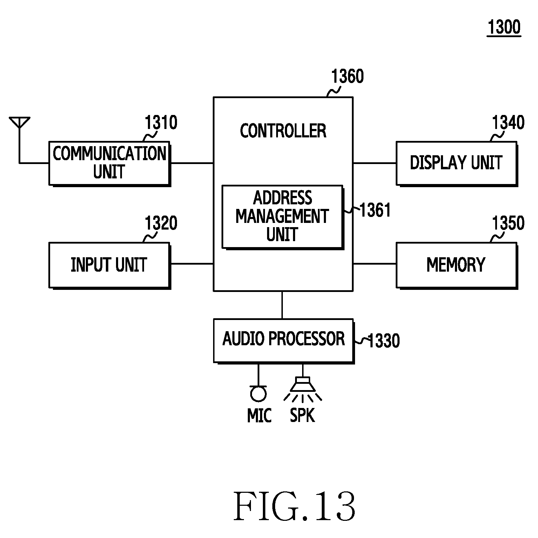

The operations of the at least one user device 1100 and the electronic device 1200 have been described above with reference to FIG. 1, so a detailed description thereof will be omitted here. However, the address management unit 515 included in the controller 290 of the electronic device 200 shown in FIGS. 1, 2, 5, and 6 may be included in the portable device 1300. The operations of the portable device 1300 are described below with reference to FIG. 13.

FIG. 13 is a block diagram illustrating main elements of a portable device 1300 according to an embodiment of the present disclosure.

Referring to FIG. 13, the portable device 1300 may include a communication unit 1310, an input unit 1320, an audio processor 1330, a display unit 1340, a memory 1350, and a controller 1360.

The communication unit 1310 may communicate with the electronic device 1200. The communication unit 1310 can communicate with the electronic device 1200 through various communication schemes. The communication unit 1310 may communicate with the electronic device 1200 through a web communication. To this end, the communication unit 1310 may access at least one of a mobile communication network and a data communication network.

The input unit 1320 may generate input data in response to a user input of the portable device 1300. The input unit 1320 may include at least one input means. The input unit 1320 may include a key pad, a dome switch, a button, a touch panel, and a jog & shuttle key.

The audio processor 1330 may process an audio signal. The audio processor 1330 may include a speaker (SPK) and a microphone (MIC). The audio processor 1330 may reproduce the audio signal output from the controller 1360 through the speaker. The audio processor 1330 may transfer the audio signal generated from the microphone to the controller 1360.

The display unit 1340 may display a screen according to the operation of the portable device 1300. The display unit 1340 may display a page corresponding to a higher address allocated to the electronic device 1200. The display unit 1340 may include a LCD, a LED display, an OLED display, a MEMS display, and an electronic paper display. The display unit 1340 may include a plurality of light emitting diodes. Further, the display unit 1340 may be combined with the input unit 1320 to be implemented as a touch screen.

The memory 1350 may store operation programs of the portable device 1300.

The controller 1360 may generate an address for connection to the electronic device 1200 and the user device 1100 and a page corresponding to the address, and control the user device 1100 by transmitting a control signal input through the page to the electronic device 1200. To this end, the controller 1360 may include an address management unit 1361. The address management unit 1361 may receive, from the electronic device 1200, a signal associated with the connection or disconnection of the user device 1100. The address management unit 1361 may change an address allocated to at least one among the electronic device 1200 and the user device 1100 according to the received signal. The address management unit 1361 may remove the address allocated to at least one among the electronic device 1200 and the user device 1100 according to the received signal. The operations of the address management unit 1361 have been already described above with reference to FIGS. 5 and 6, so a detailed description thereof will be omitted here.

When the portable device 1300 communicates with the electronic device 1200, the user can identify, through the portable device 1300, a list of the electronic device 1200 registered in the web service and at least one user devices 1100 connected to the electronic device 1200. The user may access a corresponding page through the portable device 1300 and can control an operation of at least one among the electronic device 1200 and at least one user device 1100.

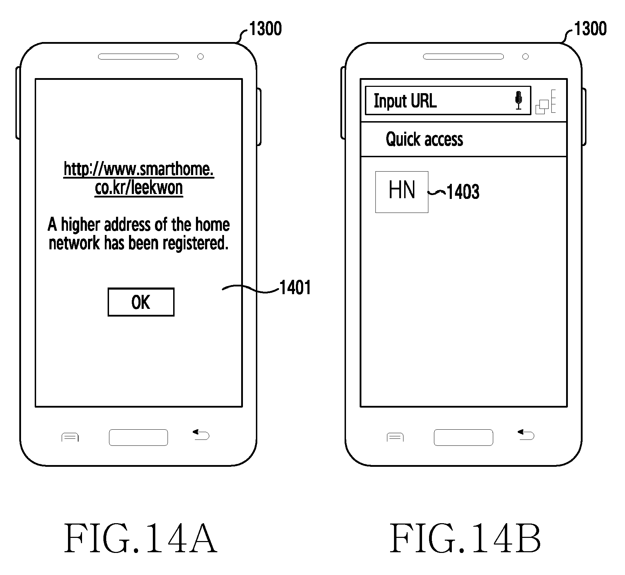

FIGS. 14A and 14B illustrate an example of screens for describing a method of configuring a higher address according to an embodiment of the present disclosure.

Referring to FIGS. 14A and 14B, if a user wants use a web service, for example, a home network service, using the electronic device 1200, for example, a HomeSync™ device, the portable device 1300 may establish a home network based on the electronic device 1200. When the home network has been completely established, a message 1401 indicating that a higher address for the home network service has been allocated to the HomeSync™ device may be displayed in the portable device 1300, as shown in FIG. 14A. For example, the address "http://www.smarthome.co.kr/leekwon" in the message 1401 may be a higher address for access to a HomeSync™ device registered in the home network service. If the user selects "OK" in the message 1401, the portable device 1300 may display a shortcut key 1403 for access to the home network service on the quick access screen as shown in FIG. 14B.

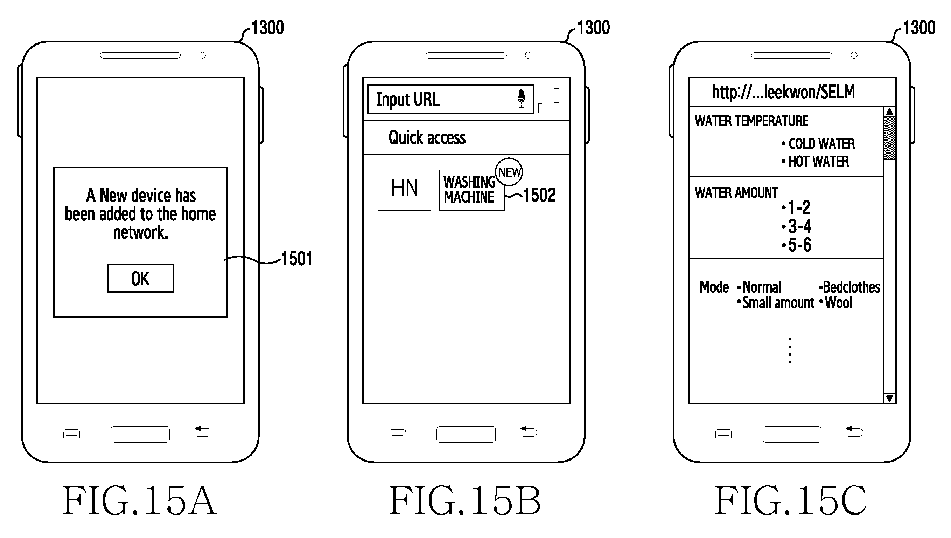

FIGS. 15A to 15C illustrate an example of screens for describing a method of configuring a lower address according to an embodiment of the present disclosure.

Referring to FIGS. 15A to 15C, when a new user device 1100 is connected to the electronic device 1200, the electronic device 1200 may transmit, to the portable device 1300, a signal notifying of the connection of a user device 1100. In the portable device 1300 having received the signal as described above, a message 1501 indicating that a new device has been added to the home network service may be displayed as shown in FIG. 15A. If a user selects "OK" in FIG. 15A, a shortcut key 1502 allowing access to a page enabling control of an operation of a washing machine may be displayed on a quick access screen as shown in FIG. 15B. If the user selects the shortcut key 1502 in FIG. 15B, the portable terminal 1300 may display a page allowing control of an operation of the washing machine, as shown in FIG. 15C.

While the present disclosure has been shown and described with reference to various embodiments thereof, it will be understood by those skilled in the art that various changes in form and details may be made therein without departing from the spirit and scope of the present disclosure as defined by the appended claims and their equivalents.

## Claims

1. A method for controlling a user device, the method comprising:
detecting a connection of at least one user device by an electronic device;
generating a device address for access to the user device;
generating a page corresponding to the device address; and
controlling the user device according to a control signal input through the page.

2. The method of claim 1, further comprising:
generating an address for access to the electronic device as a higher address and a page corresponding to the higher address.

3. The method of claim 2, wherein the generating of the device address comprises:
determining whether the higher address has been changed, by comparing information of the electronic device and information of the user device;
generating a new higher address as the device address when changing of the higher address is necessary; and
allocating the new higher address to the user device.

4. The method of claim 3, wherein the generating of the device address comprises:
generating a lower address of the higher address as the device address when the changing of the higher address is unnecessary.

5. The method of claim 1, further comprising:
detecting removal of the user device.

6. The method of claim 5, further comprising:
selecting one device among the electronic device and another user device connected to the electronic device if the device address is a higher address;
generating a new higher address; and
allocating the new higher address to at least one of the selected device and the other user device.

7. The method of claim 5, further comprising:
removing the lower address if the device address is the lower address.

8. An apparatus for controlling a user device, the apparatus comprising:
a device connection unit configured to detect a connection of at least one user device; and
a controller configured to:
generate a device address for access to the user device and a page corresponding to the device address, and
control the user device according to a control signal input through the page.

9. The apparatus of claim 8, wherein the controller is further configured to generate an address for access to the electronic device as a higher address and a page corresponding to the higher address.

10. The apparatus of claim 9, wherein the controller is further configured to determine whether the higher address has been changed, by comparing information of the electronic device and information of the user device.

11. The apparatus of claim 10, wherein the controller is further configured to:
generate a new higher address as the device address when the changing of the higher address is necessary,
allocate the new higher address to the user device, and
generate a lower address of the higher address as the device address when the changing of the higher address is unnecessary.

12. The apparatus of claim 9, wherein the device connection unit is further configured to detect removal of the user device.

13. The apparatus of claim 12, wherein the controller is further configured to select one device among the electronic device and another user device connected to the electronic device if the device address is a higher address.

14. The apparatus of claim 13, wherein the controller is further configured to generate a new higher address and allocate the new higher address to at least one of the selected device and the other user device.

15. The apparatus of claim 12, wherein when the device address is a lower address, the controller removes the lower address.
